(19) Europäisches Patentamt
European Patent Office
Office européen des brevets

(11) Veröffentlichungsnummer: **0 317 881**
**A2**

(12) **EUROPÄISCHE PATENTANMELDUNG**

(21) Anmeldenummer: **88119068.0**

(22) Anmeldetag: **17.11.88**

(51) Int. Cl.4: **C07F 9/58 , C07F 9/65 , A01N 57/08**

(30) Priorität: **25.11.87 DE 3739885**

(43) Veröffentlichungstag der Anmeldung:
**31.05.89 Patentblatt 89/22**

(84) Benannte Vertragsstaaten:
**AT BE CH DE ES FR GB GR IT LI NL**

(71) Anmelder: **HOECHST AKTIENGESELLSCHAFT**
**Postfach 80 03 20**
**D-6230 Frankfurt am Main 80(DE)**

(72) Erfinder: **Ehrhardt, Heinz**
**Bergstrasse 21**
**D-8901 Rehling(DE)**
Erfinder: **Sachse, Burkhard, Dr.**
**An der Ziegelei 30**
**D-6233 Kelkheim (Taunus)(DE)**
Erfinder: **Wicke, Heinrich, Dr.**
**Schillerstrasse 3**
**D-6239 Eppstein/Taunus(DE)**

(54) **Pyridyl- und Pyrazinylverbindungen, Varfahren zu ihrer Herstellung, sie enthaltende Mittel und ihre Verwendung als Fungizide.**

(57) Pyridyl- und Pyrazinylverbindungen mit der allgemeinen Formel I

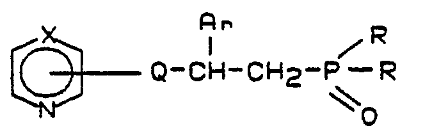

(I),

worin die Symbole im wesentlichen folgende Bedeutungen haben: X = N oder CH, R = H, Alkyl, Halogenalkyl, Cycloalkyl oder gegebenenfalls substituiertes Phenyl,

Q = 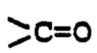, 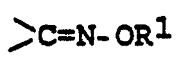, 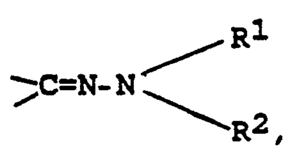 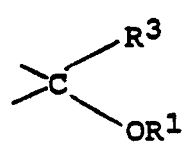

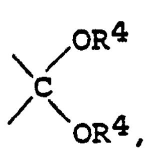 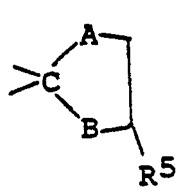, 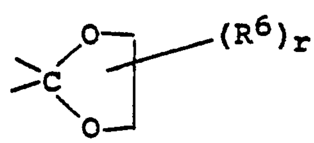

,

EP 0 317 881 A2

$R^1$ = H, Alkyl, Alkenyl, Alkinyl, Cycloalkyl, substituiertes Phenyl, oder -C-$R^7$, $R^2$, $R^3$ = H, Alkyl oder gegebenenfalls substituiertes Phenyl, $R^4$ = Alkyl, $R^5$ = H oder gegebenenfalls substituiertes Alkyl, $R^6$ = H, Alkyl, $R^7$ = Alkyl, Phenyl, welche beide substituiert sein können, Alkenyl, Alkinyl, Hydroxy, Mercapto oder Cycloalkyl, A, B = O, NH, S oder N-alkyl, r = 1, 2 oder 3 und Ar = Naphthyl oder gegebenenfalls substituiertes Furyl, Thienyl, Pyridyl oder Phenyl, sowie deren Isomerengemische als auch deren N-oxide, Säureadditionssalze und Quaternisierungsprodukte besitzen vorteilhafte fungizide Eigenschaften. Ferner wird ein Verfahren zur Herstellung der obengenannten Verbindungen beschrieben.

# Pyridyl- und Pyrazinylverbindungen, Verfahren zu ihrer Herstellung, sie enthaltende Mittel und ihre Verwendung als Fungizide.

Gegenstand der vorliegenden Erfindung sind neue Pyridyl-und Pyrazinylverbindungen, Verfahren zu ihrer Herstellung, sie enthaltende Mittel und ihre Verwendung als Fungizide.

Pyridin- und Pyrazinderivate sind bereits als wirksame Komponenten in fungiziden Mitteln bekannt. Dazu gehören beispielsweise 3-Pyridyl- oder 2-Pyrazinyl-acetophenon-O-methyl-oxime gemäß der EP-A 0 049 854, 3-Pyridyl-2,4-dichlorbenzylketone und deren 1,3-Dioxolanderivate (US-PS 4,380,544), 3-Pyridylbenzylcarbinole (US-PS 4,431,812), Pyridyl-ethanonoxime gemäß Anna Babska et al. in Pol. J. Pharmacol-Pharm., 1973, 25(2), 175 - 180, sowie bestimmte substituierte Pyridin- bzw. Pyrazinderivate (DE-A 3 326 456, 3 342 671 und 3 435 644).

Die Wirkung dieser Pyridin- und Pyrazinderivate in fungiziden Mitteln ist jedoch insbesondere bei niedrigen Einsatzmengen nicht immer befriedigend.

Es wurden neue Pyridyl- und Pyrazinylverbindungen gefunden, die vorteilhafte Wirkungen bei der Bekämpfung eines breiten Spektrums phytopathogener Pilze insbesondere bei niedrigen Dosierungen aufweisen.

Gegenstand der vorliegenden Erfindung sind daher die Verbindungen der allgemeinen Formel I

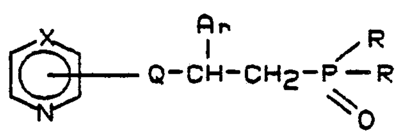

(I),

worin

X = N, CH oder N → O,

R = unabhängig voneinander $(C_1-C_6)$ Alkyl, $(C_3-C_6)$Cycloalkyl, Phenyl, das bis zu dreifach durch Halogen, $(C_1-C_4)$Alkyl, $(C_1-C_2)$Haloalkyl, Cyano, Nitro, Hydroxy, Mercapto, $(C_1-C_6)$Alkoxy, $(C_1-C_6)$Alkylthio oder $(C_1-C_4)$Haloalkoxy substituiert sein kann,

Q = eine der Gruppen

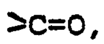, 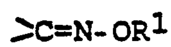, 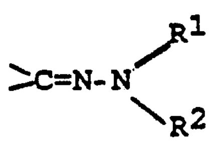, 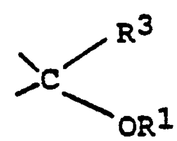,

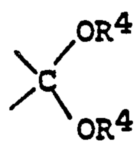, 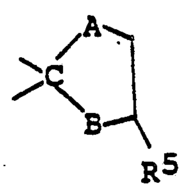, 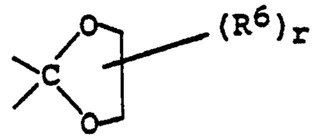,

$R^1$ = Wasserstoff, $(C_1-C_6)$Alkyl, $(C_3-C_6)$Cycloalkyl, $(C_3-C_6)$Alkenyl, $(C_3-C_6)$Alkinyl, unsubstituiertes oder bis zu dreifach im Phenylteil durch Halogen substituiertes Phenyl-$(C_1-C_6)$alkyl oder Phenoxy-$(C_1-C_6)$alkyl, den Rest

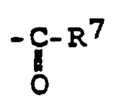 oder 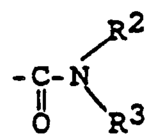,

$R^2$ = Wasserstoff, $(C_1-C_6)$Alkyl, unsubstituiertes oder bis zu dreifach durch Halogen, $(C_1-C_4)$Alkyl, Nitro, Cyano, $(C_1-C_4)$Alkoxy, Phenoxy oder Trihalogenmethyl substituiertes Phenyl,

$R^3$ = Wasserstoff, $(C_1\text{-}C_6)$Alkyl, $(C_3\text{-}C_6)$Alkinyl, Phenylacetylenyl, unsubstituiertes oder bis zu dreifach durch Halogen substituiertes Phenyl, $\underset{\underset{O}{\|}}{P}(CH_3)_2$,

$R^4$ = $(C_1\text{-}C_6)$Alkyl,

$R^5$ = Wasserstoff, den Rest $(C_1\text{-}C_6)$Alkyl-$NR^8R^9$, unsubstituiertes oder bis zu dreifach durch Halogen, Hydroxy, Mercapto, $(C_1\text{-}C_4)$Alkoxy, $(C_1\text{-}C_4)$Alkoxycarbonyl, Phenyl, Phenoxy, Phenylthio, Phenylsulfonyl, Phenyl- $(C_1\text{-}C_4)$alkoxy, Phenyl-$(C_1\text{-}C_4)$alkylthio oder Phenyl-$(C_1\text{-}C_6)$alkylsulfonyl substituiertes $(C_1\text{-}C_6)$Alkyl, wobei die sieben letztgenannten Alkylsubstituenten unsubstituiert oder ihrerseits im Phenylteil bis zu dreifach durch Halogen, $(C_1\text{-}C_4)$Alkyl oder $(C_1\text{-}C_4)$Alkoxy substituiert sein können,

$R^6$ = Wasserstoff oder $(C_1\text{-}C_6)$Alkyl,

$R^7$ = $(C_1\text{-}C_6)$Alkyl, $(C_1\text{-}C_6)$Haloalkyl, $(C_3\text{-}C_6)$Cycloalkyl, $(C_3\text{-}C_6)$Alkenyl, $(C_3\text{-}C_6)$Alkinyl, Hydroxy, Mercapto, $(C_1\text{-}C_{12})$Alkoxy, $(C_1\text{-}C_{12})$Alkylthio, Phenyl, Naphthyl, Phenyl-$(C_1\text{-}C_4)$ alkyl, Phenyl-$(C_1\text{-}C_4)$alkoxy oder Phenyl-$(C_1\text{-}C_4)$alkylthio, wobei die fünf letztgenannten Reste im Naphthyl- oder Phenylteil unsubstituiert oder bis zu dreifach durch Halogen, $(C_1\text{-}C_4)$Alkyl, $(C_1\text{-}C_4)$Alkoxy, Phenoxy, Trifluormethyl oder Trichlormethyl substituiert sein können,

$R^8$, $R^9$ = unabhängig voneinander $(C_1\text{-}C_{12})$Alkyl, $(C_3\text{-}C_{12})$Alkenyl, $(C_3\text{-}C_7)$Alkinyl, $(C_5\text{-}C_7)$Cycloalkyl, das ein-oder mehrfach durch $(C_1\text{-}C_4)$Alkyl substituiert sein kann, $(C_6\text{-}C_{10})$Aryl,$(C_6\text{-}C_{10})$Aryl- $(C_1\text{-}C_2)$Alkyl, welche beide im Arylteil ein- oder mehrfach durch Halogen, $(C_1\text{-}C_4)$Alkyl oder $(C_1\text{-}C_2)$Haloalkyl substituiert sein können,

oder

einer der Reste $R^8$, $R^9$ ist ein unsubstituierter oder einfach oder mehrfach, gleich oder verschieden substituierter 5- bis 7-gliedriger, gesättigter oder ungesättigter, über ein C- oder ein Heteroatom gebundener Heterocyclus mit 1 bis 3 gleichen oder verschiedenen Heteroatomen, vorzugsweise mit den Heteroatomen Stickstoff und/oder Schwefel und den Substituenten $(C_1\text{-}C_4)$Alkyl, $(C_1\text{-}C_4)$Alkoxycarbonyl oder Phenyl,

oder

beide Reste $R^8$, $R^9$ stehen zusammen mit dem Stickstoffatom, an das sie gebunden sind, für einen unsubstituierten oder einfach oder mehrfach, gleich oder verschieden substituierten 5- bis 7-gliedrigen, gesättigten oder ungesättigten Heterocyclus mit 1 bis 3 gleichen oder verschiedenen Heteroatomen, vorzugsweise mit den Heteroatomen Stickstoff, Sauerstoff und/oder Schwefel und den Substituenten $(C_1\text{-}C_4)$Alkyl, $(C_1\text{-}C_4)$Alkoxycarbonyl oder Phenyl,

r = 1, 2 oder 3

A, B = unabhängig voneinander O, NH, $N(C_1\text{-}C_4)$-alkyl oder S,

Ar = eine der Gruppen

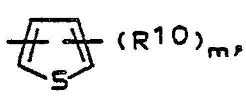, 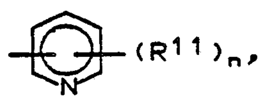, 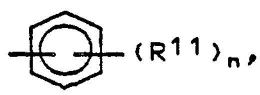, 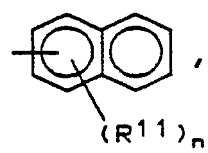,

$R^{10}$ = Wasserstoff, $(C_1\text{-}C_6)$Alkyl oder Halogen,

$R^{11}$ = Wasserstoff, Halogen, $(C_1\text{-}C_5)$Haloalkyl, Cyano, Nitro, Hydroxy, Mercapto, $(C_1\text{-}C_6)$Alkyl, $(C_3\text{-}C_6)$-Cycloalkyl, $(C_1\text{-}C_6)$Alkoxy, $(C_1\text{-}C_6)$Alkylthio, $(C_1\text{-}C_4)$Haloalkoxy, Phenyl, Phenyl$(C_1\text{-}C_4)$alkyl, Phenoxy oder Phenylthio, wobei die vier letztgenannten Reste im Phenylteil bis zu dreifach durch Halogen substituiert sein können,

m = 1, 2 oder 3 und

n = 1, 2, 3 oder 4, wobei bei $m > 1$ als auch bei $n > 1$ die Substituenten $R^{10}$ bzw. $R^{11}$ gleich oder verschieden sein können, bedeuten, sowie deren N-oxide, Säureadditionssalze oder Quaternisierungsprodukte.

Dabei können die Alkyl-, Alkenyl- oder Alkinylreste sowohl geradkettig als auch verzweigt sein. Halogen bedeutet F, Cl, Br und J, bevorzugt F, Cl und Br.

Die Bindung zum Pyridylrest in der Formel I kann sich in 2-, 3- oder 4-Stellung befinden. Sie befindet sich insbesondere in der Stellung 2 oder 3. Die Verbindungen der allgemeinen Formel I können teilweise als reine Isomere oder auch als Isomerengemische unterschiedlicher Zusammensetzung anfallen, die ebenfalls Gegenstand der vorliegenden Erfindung sind.

Bevorzugt sind unter den Verbindungen der allgemeinen Formel I die Verbindung der Formeln Ia und Ib

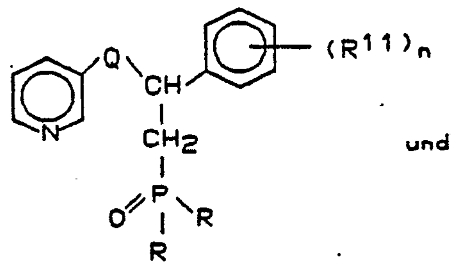

und

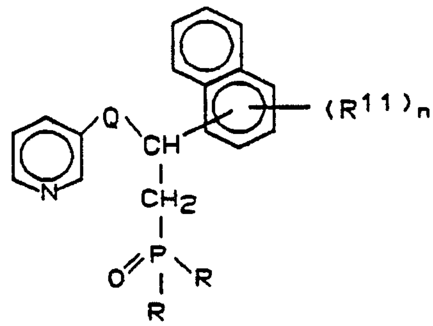

(Ia) (Ib)

worin
R, $R^{11}$, Q und n die Bedeutungen wie in Formel I besitzen, sowie deren Säureadditionsalze, N-oxide oder Quaternisierungsprodukte.

Besonders bevorzugt unter den Verbindungen der Formel I sind diejenigen der Formeln Ia und Ib, worin R, $R^{11}$ und n die Bedeutungen wie in Formel I besitzen und Q die Reste $>C=O$, $>C=NOR^1$ oder

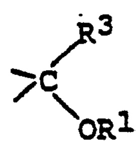

bedeutet, wobei $R^1$ und $R^3$ die Bedeutungen wie in Formel I besitzen, sowie deren N-oxide, Säureadditionssalze oder Quaternisierungsprodukte.

Die N-oxide, Säureadditionsprodukte und die Quaternisierungsprodukte der Verbindungen der Formel I werden ebenfalls von der Erfindung umfaßt.

Zur Herstellung der Säureadditionssalze der Verbindungen der Formel I kommen folgende Säuren in Frage: Halogenwasserstoffsäuren wie Chlorwasserstoffsäure oder Bromwasserstoffsäure, ferner Phosphorsäure, Salpetersäure, Schwefelsäure, mono- und bifunktionelle Carbonsäuren und Hydroxycarbonsäuren wie Essigsäure, Maleinsäure, Bernsteinsäure, Fumarsäure, Weinsäure, Citronensäure, Salicylsäure, Sorbinsäure oder Milchsäure, sowie Sulfonsäuren wie p-Toluolsulfonsäure oder 1,5-Naphthalindisulfonsäure. Die Säureadditionssalze der Verbindungen der Formel I können in einfacher Weise nach üblichen Salzbildungsmethoden, z.B. durch Lösen einer Verbindung der Formel I in einem geeigneten organischen Lösemittel und Hinzufügen der Säure erhalten werden und in bekannter Weise, z.B. durch Abfiltrieren, isoliert und gegebenenfalls durch Waschen mit einem inerten organischen Lösemittel gereinigt werden.

Zur Herstellung von Quaternisierungsprodukten verwendet man Alkyl-, Alkylthioalkyl-, Alkoxyalkyl-, insbesondere $(C_1$-$C_6)$-Alkyl- und gegebenenfalls im Phenylrest substituierte, insbesondere halogenierte Phenacylhalogenide. Die Herstellung dieser Derivate erfolgt nach den allgemein üblichen Methoden (Org. Synth. Col.Vol.V, 825), ebenso die Herstellung der N-oxide (Org. Synth. Col.Vol.IV, 704).

Gegenstand der vorliegenden Erfindung sind auch Verfahren zur Herstellung von Verbindungen der Formel I, dadurch gekennzeichnet, daß man

a) eine Verbindung der Formel II

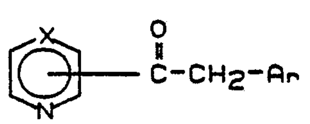

(II),

worin X und Ar die Bedeutungen wie in Formel I besitzen,
mit einer Verbindung der Formel III

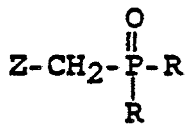

(III),

worin Z für eine nucleofuge Abgangsgruppe steht und R die Bedeutung wie in Formel I besitzt, in Gegenwart einer Base umsetzt oder

b) eine Verbindung der Formel IV

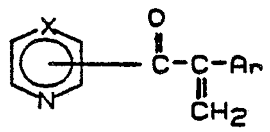

(IV),

worin X und Ar die Bedeutungen wie in Formel I besitzen, mit einer Verbindung der Formel V

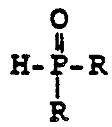

(V),

worin R die Bedeutung wie in Formel I besitzt, in Gegenwart einer Base umsetzt und die nach Variante a) oder b) erhaltenen Verbindungen der Formel I durch Derivatisierung der Carbonylgruppe in Verbindungen der Formel I mit Q ≠ >C=O umwandelt.

Bei der Variante a) kann in Abhängigkeit vom Keton (II), dem Alkylierungsmittel (III), sowie der üblicherweise im Verfahren verwendeten Base und dem Lösemittel ein wechselnder, gegebenenfalls bis zu 100 % betragender Anteil an O-Alkylierungsprodukten als Enolderivat entstehen (Formel VI)

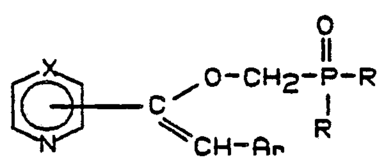

(VI),

Die nach den Varianten a) oder b) erhaltenen Verbindungen lassen sich durch an sich bekannte Derivatisierungen wie Reduktion, Grignardierung, Acetalisierung oder Oximierung in weitere erfindungsgemäße Verbindungen der allgemeinen Formel (I) mit Q ≠ C=O überführen.

Die Herstellung der erfindungsgemäß bevorzugten Verbindungen der allgemeinen Formel Ia erfolgt gemäß Variante a) durch Alkylierung der an sich bekannten, bzw. nach bekannten Verfahren (J. Am. Chem. Soc. 72, 1990 (1950), US-PS 3,717,647 und EP-A 0 062 238) synthetisierten Verbindungen der Formel IIa.

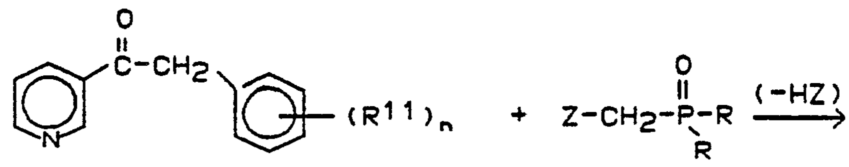


(IIa) (III)

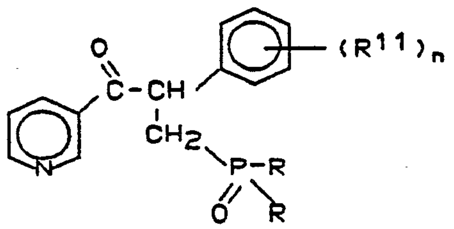

(Ia)

Dabei steht Formel III für bekannte Alkylierungsmittel mit einer nucleofugen Abgangsgruppe Z, die insbesondere ein Halogenid wie Chlorid, Bromid oder Jodid, Tosylat oder Mesylat sein kann. Genannt seien beispielsweise: Chlormethyl-dimethylphosphanoxid, Chlormethyl-diphenylphosphanoxid, Mesyloxymethanphosphonsäurediethylester, Tosyloxymethanphosphonsäuredimethylester.

Die Umsetzung zum Keton der allgemeinen Formel I wird in Anwesenheit von Basen wie Alkalicarbonaten, Alkalihydriden oder auch Lithiumdialkylamiden - genannt sei beispielhaft Lithiumdiisopropylamid-, gegebenenfalls unter vorheriger Salzbildung von (IIa), in einem Verdünnungsmittel, vorzugsweise einem aprotischen organischen Lösemittel wie Tetrahydrofuran, Dioxan, Dimethoxyethan, Diethylether oder Dimethylformamid, bei Reaktionstemperaturen zwischen - 78°C und +50°C durchgeführt.

Gemäß Verfahrenvariante b) können Verbindungen der allgemeinen Formel I durch basenkatalysierte, nucleophile Addition von

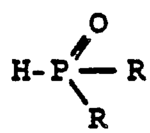

an 1-(3-Pyridyl)-2-aryl-2-aryl-propenone-(1) der allgemeinen Formel IV erhalten werden:

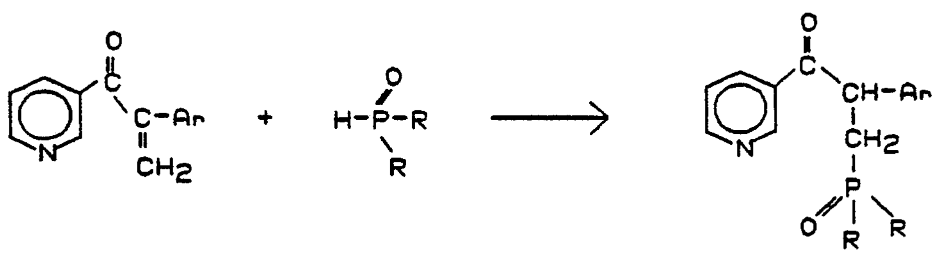

(IV) (V)

Die zur nucleophilen Addition geeigneten Verbindungen (V) sind allgemein bekannt, genannt seien beispielsweise Dimethylphosphanoxid, Dipropylphosphanoxid, Diphenylphosphanoxid, Di-(4-chlorphenyl)-phosphanoxid, Phosphorigsäurediethylester, Phosphorigsäure-di-(2,2,2-trifluorethyl)-ester.

Dabei kann die Additionsreaktion ohne Solvens oder in Gegenwart eines inerten Lösungsmittels wie z.B. Toluol, Chlorbenzol, Tetrahydrofuran durchgeführt werden. Die Reaktionstemperaturen liegen zwischen 0°C und 160°C vorzugsweise 60°C - 140°C. Basen wie z.B. Triethylamin können gegebenenfalls als Katalysator dienen.

Verwendet man beispielsweise 2-(2,4-Dichlorphenyl)-1-(3-pyridyl)-2-propen-1-on und Dimethylphosphanoxid, so läßt sich der Reaktionsablauf wie folgt beschreiben:

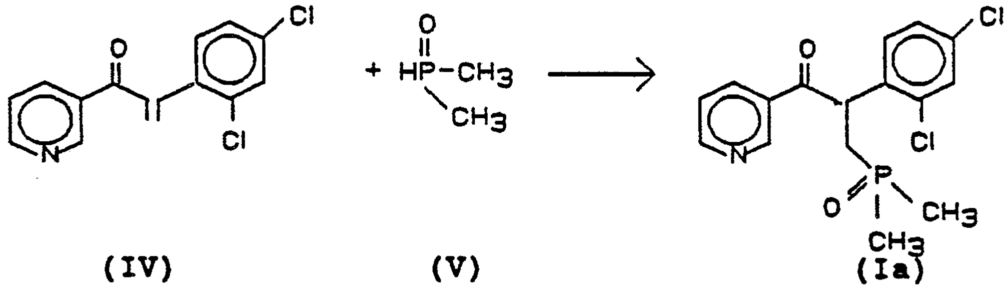

(IV) (V) (Ia)

Dabei überrascht, daß die Addition ausschließlich mit der angegebenen Chemoselektivität abläuft, da auch mit der Addition des Dimethylphosphanoxids an die Carbonylgruppe gerechnet werden mußte.

Die erfindungsgemäßen Verbindungen der Formel I in denen

Q = 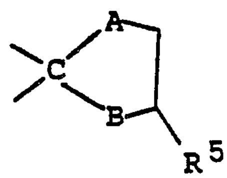

bedeutet werden erhalten, in dem man die Ketone der allgemeinen Formel I (Q = >C=O) mit einer Verbindung der Formel VII umsetzt

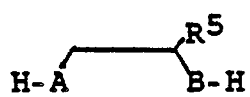 (VII).

Dabei werden beispielsweise im Falle von A, B = O und/oder S die Ketone (I) mit einem Überschuß des entsprechenden Diols, Dithiols oder einer gegebenenfalls substituierten 2-Mercaptoethanols der allgemeinen Formel (VII) in Gegenwart von mindestens äquimolaren Mengen einer Säure wie Schwefelsäure oder p-Toluolsulfonsäure und gleichzeitiger, kontinuierlicher Wasserentfernung, z.B. unter Verwendung eines Wasserabscheiders oder duch Zusatz eines Molekularsiebs, umgesetzt. Die Ketalisierungsreagenzien (VII) sind allgemein bekannte Verbindungen. Gegebenenfalls lassen sich aber auch die Ketale durch Derivatisierung wie Alkylierung, Acylierung oder nucleophile Substitution an der primär erhaltenen Gruppe $R^5$ in weitere erfindungsgemäße Verbindungen überführen. Das gilt insbesondere für derivatisierbare Verbindungen mit $R^5$ in der Bedeutung von Halogenalkyl-, Hydroxyalkyl-, Mercaptoalkyl- oder Alkylsulfonylgruppen.

In analoger Weise werden die Verbindungen der allgemeinen Formel I, in welchen

Q = 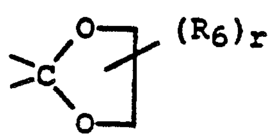 oder 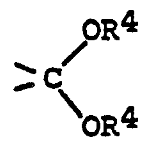

bedeutet, aus den Ketonen gemäß der allgemeinen Formel I mit Q = >C=O durch Umsetzung mit einem Überschuß des entsprechenden mono- oder bifunktionellen Alkohols unter den oben beschriebenen Bedingungen hergestellt.

Die erfindungsgemäßen Verbindungen der allgemeinen Formel I, in welchen Q = C=N-OR$^1$ mit R$^1$ = H ist, erhält man aus den entsprechenden Ketonen durch Umsetzung mit mindestens molaren Mengen an Hydroxylaminhydrochlorid oder -sulfat in Gegenwart von 1,0 bis 1,5 Moläquivalenten eines Säurebinders, beispielsweise eines Alkalicarbonats oder -hydroxids oder eines tertiären Amins, wie Triethylamin oder Pyridin, in einem Lösemittel wie Wasser, Ethanol, Toluol, Xylol oder gegebenenfalls einem Gemisch

derselben, im Temperaturbereich von 60 bis 140 °C, bevorzugt bei 75 bis 115 °C, nach 6 bis 60 h Reaktionszeit.

Die Verbindungen der allgemeinen Formel I mit Q = >C($R^3$)O$R^1$, $R^1$ = H und $R^3$ ≠ H erhält man durch Umsetzen der Ketone der allgemeinen Formel (I) mit dem entsprechenden Grignard-Reagenz der Formel $R^3MgX'$ (X' = Chlor, Brom Jod, bevorzugt Jod) in einem etherischen Lösemittel wie Diethylether, Tetrahydrofuran oder einem Gemisch derselben, bei Temperaturen zwischen 10 und 40 °C und nachfolgender Hydrolyse.

Die Verbindungen der allgemeinen Formel I mit Q = >C($R^3$)O$R^1$, $R^1$ und $R^3$ = H werden durch Reduktion der Ketone der allgemeinen Formel I nach prinzipiell bekannten Methoden, beispielsweise unter Verwendung von komplexen Metallhydriden in geeigneten organischen Lösemitteln wie Natriumborhydrid in Methanol vorzugsweise bei Temperaturen zwischen 20 und 60 °C, erhalten.

Erfindungsgemäße Hydrazone der allgemeinen Formel I mit Q = >C=N-N$R^1R^2$ erhält man durch Kondensation der Ketone der allgemeinen Formel I mit wenigstens 1 Moläquivalent eines Hydrazin-Derivates der allgemeinen Formel $H_2$N-N$R^1R^2$ nach üblichen Methoden, beispielsweise in einem Lösemittelgemisch aus Eisessig und Ethanol bei Temperaturen zwischen 15 und 60 °C.

Zur weiteren Derivatisierung können spezielle Verbindungen der Formel I mit Q = >C=N-OH, >C-($R^3$)OH, >CHOH oder >C=N-NH$R^2$ in bekannter Weise alkyliert, acyliert oder carbamoyliert werden.

Die erfindungsgemäßen Verbindungen der Formel I zeichnen sich durch eine hervorragende fungizide Wirkung aus. Bereits in das pflanzliche Gewebe eingedrungene pilzliche Krankheitserreger lassen sich erfolgreich kurativ bekämpfen. Dies ist besonders wichtig und vorteilhaft bei solchen Pilzkrankheiten, die nach eingetretener Infektion mit den sonst üblichen Fungiziden nicht mehr wirksam bekämpft werden können. Das Wirkungsspektrum der beanspruchten Verbindungen erfaßt eine Vielzahl verschiedener wirtschaftlich bedeutender, phytopathogener Pilze, wie z.B. Pyricularia oryzae, Venturia inaequalis, Cercospora beticola, Echte Mehltauarten, Fusariumarten, Plasmopora viticola, Pseudoperonospora cubensis, verschiedene Rostpilze und Pseudocercosporella herpotrichoides. Besonders gut werden Benzimidazol- und Dicarboximid-sensible und -resistente Botrytis cinerea-Stämme erfaßt.

Die erfindungsgemäßen Verbindungen eignen sich daneben auch für den Einsatz in technischen Bereichen, beispielsweise als Holzschutzmittel, als Konservierungsmittel in Anstrichfarben, in Kühlschmiermitteln für die Metallbearbeitung oder als Konservierungsmittel in Bohr-und Schneidölen.

Gegenstand der Erfindung sind auch Mittel, die die Verbindungen der Formel I neben geeigneten Formulierungshilfsmitteln enthalten.

Die erfindungsgemäßen Mittel enthalten die Wirkstoffe der Formel I im allgemeinen zu 1 bis 95 Gew.-%.

Sie können auf verschiedene Art formuliert werden, je nachdem wie es durch die biologischen und/oder chemischphysikalischen Parameter vorgegeben ist. Als Formulierungsmöglichkeiten kommen daher infrage: Spritzpulver (WP), emulgierbare Konzentrate (EC), wäßrige Lösungen (SC), Emulsionen, versprühbare Lösungen, Dispersionen auf Öl- oder Wasserbasis (SC), Suspoemulsionen (SC), Stäubemittel (DP), Beizmittel, Granulate in Form von Mikro-, Sprüh-, Aufzugs- und Adsorptionsgranulaten, wasserdispergierbare Granulate (WG), ULV-Formulierungen, Mikrokapseln, Wachse oder Köder.

Diese einzelnen Formulierungstypen sind im Prinzip bekannt und werden beispielsweise beschrieben in: Winnacker-Küchler, "Chemische Technologie", Band 7, C-Hauser Verlag München, 4. Aufl. 1986; van Falkenberg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix. Spritzpulver sind in Wasser gleichmäßig dispergierbare Präparate, die neben dem Wirkstoff außer einem Verdünnungs-oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium, dibutylnaphthalin-sulfonsaures Natrium oder auch oleylmethyltaurinsaures Natrium enthalten. Emulgierbare Konzentrate werden durch Auflösen des

Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid- Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierugen gegebenenfalls die jeweils üblichen Haft-, Netz-, Dispergier-, Emulgier-, Penetrations-, Lösungsmittel, Füll-oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Mit den äußeren Bedingungen wie Temperatur, Feuchtigkeit u.a. variiert die erforderliche Aufwandmenge. Sie kann innerhalb weiter Grenzen schwanken, z.B. zwischen 0,005 und 10,0 kg/ha oder mehr Aktivsubstanz, vorzugsweise liegt sie jedoch zwischen 0,01 und 5 kg/ha.

Die erfindungsgemäßen Wirkstoffe können in ihren handelsüblichen Formulierungen entweder allein oder in Kombination mit weiteren, literaturbekannten Fungiziden angewendet werden.

Als literaturbekannte Fungizide, die erfindungsgemäß mit den Verbindungen der Formel I kombiniert werden können, sind z.B. folgende Produkte zu nennen:

Imazalil, Prochloraz, Fenapanil, SSF 105, Triflumizol, PP 969, Flutriafol, BAY-MEB 6401, Propiconazol, Etaconazol, Diclobutrazol, Bitertanol, Triadimefon, Triadimenol, Fluotrimazol, Tridemorph, Dodemorph, Fenpropimorph, Falimorph, S-32165, Chlobenzthiazone, Parinol, Buthiobat, Fenpropidin, Triforine, Fenarimol, Nuarimol, Triarimol, Ethirimol, Dimethirimol,

Bupirimate, Rabenazole, Tricyclazole, Fluobenzimine, Pyroxyfur, NK-483, PP-389, Pyroquilon, Hymexazole, Fenitropan, UHF-8227, Cymoxanil, Dichlorunanid, Captafol, Captan, Folpet, Tolylfluanid, Chlorothalonil, Etridiazol, Iprodione (Formel II), Procymidon, Vinclozolin, Metomeclan, Myclozolin, Dichlozolinate, Fluorimide, Drazoxolon, Chinomethionate, Nitrothalisopropyl, Dithianon, Dinocap, Binapacryl,

Fentinacetate, Fentinhydroxide, Carboxin, Oxycarboxin, Pyracarbolid, Methfuroxam, Fenfuram, Furmecyclox, Benodanil, Mebenil, Mepronil, Flutalanil, Fuberidazole, Thiabendazole, Carbendazim, Benomyl, Thiophanate, Thiofanatemethyl, CGD-94340 F, IKF-1216,

Mancozeb, Maneb, Zineb, Nabam, Thiram, Probineb, Prothiocarb, Propamocarb, Dodine, Guazatine, Dicloran, Quintozene, Chloroneb, Tecnazene, Biphenyl, Anilazine, 2-Phenylphenol, Kupferverbindungen wie Cuoxychlorid, Oxine-Cu, Cu-oxide, Schwefel, Fosetylaluminium,

Natrium-dodecylbenzolsulfonat, Natrium-dodecylsulfat, Natrium-C13/C15-alkoholethersulfonat, Natrium-cetostearylphosphatester, Dioctyl-natriumsulfosuccinat, Natrium-isopropylnaphthalinsulfonat, Natrium-methylenbisnaphthalinsulfonat, Cetyl-trimethyl-ammoniumchlorid, Salze von langkettigen primären, sekundären oder tertiären Aminen, Alkyl-propylenamine, Lauryl-pyridinium-bromid, ethoxilierte quaternierte Fettamine, Alkyldimethyl-benzyl-ammoniumchlorid und 1-Hydroxyethyl-2-alkyl-imidazolin.

Die oben genannten Kombinationspartner stellen bekannte Wirkstoffe dar, die zum großen Teil in CH.R. Worthing, U.S.B. Walker, The Pesticide Manual, 7. Auflage (1983), British Crop Protection Council beschrieben sind.

Darüberhinaus könenn die erfindungsgemäßen Wirkstoffe, insbesondere die der aufgeführten Beispiele, in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen

beispielsweise Phosphorsäureester, Carbamate, Carbonsäureester, Formamidine, Zinnverbindungen, durch Mikroorganismen hergestellte Stoffe u.a.. Bevorzugte Mischungspartner sind:

1. aus der Gruppe der Phosphorsäureester Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoat, Ethoprophos, Etrimfos, Fenitrothion, Fenthion, Heptenophos, Parathion, Parathion-methyl, Phosalon, Pirimiphos-ethyl, Pirimiphos-methyl, Profenofos, Prothiofos, Sulprofos, Triazophos, Trichlorphon.

2. aus der Gruppe der Carbamate Aldicarb, Bendiocarb, BPMC (2-(1-Methylpropyl)phenyl-methylcarbamat), Butocarboxim, Butoxicarboxim, Carbaryl, Carbofuran, Carbosulfan, Cloethocarb, Isoprocarb, Methomyl, Oxamyl, Pirimicarb, Promecarb, Propoxur, Thiodicarb.

3. aus der Gruppe der Carbonsäureester Allethrin, Alphamethrin, Bioallethrin, Bioresmethrin, Cycloprothrin, Cyfluthrin, Cyhalothrin, Cypermethrin, Deltamethrin, 2,2-Dimethyl-3-(2-chlor-2-trifluormethyl-vinyl)-cyclopropancarbonsäure-(alpha-cyano-3-phenyl-2-methyl-benzyl)ester (FMC 54800), Fenpropathrin, Fenfluthrin, Fenvalerat, Flucythrinate, Flumethrin, Fluvalinate, Permethrin, Resmethrin, Tralomethrin.

4. aus der Gruppe der Formamidine Amitraz, Chlordimeform

5. aus der Gruppe der Zinnverbindungen Azocyclotin, Cyhexatin, Fenbutatinoxid

6. Sonstige

Abamektin, Bacillus thuringiensis, Bensultap, Binapacryl, Bromopropylate, Buprofecin, Camphechlor, Cartap, Chlorbenzialate, chlorfluazuron, 2-(4-Chlorphenyl)-4,5-diphenylthiophen (UBI-T 930), Chlofentezine, Cyclopropancarbonsäure(2-naphthylmethyl)ester (Ro 12-0470), Cyromacin, DDT, Dicofol, N-(3,5-Dichlor-4-(1,1,2,2-tetrafluoroethoxy)phenylamino)carbonyl)-2,6-difluorbenzamide (XRD 473), Diflubenzuron, N-(2,3-Dihydro-3-methyl-1,3-thiazol-2-ylidene)2,4-xylidine, Dinobuton, Dinocap, Endosulfan, Fenoxycarb, Fenthiocarb, Flubenzimine, Flufenoxuron, Gamma-HCH, Hexythiazox, Hydramethylnon (AC 217 300), Ivermectin, 2-Nitromethyl-4,5-dihydro-6H-thiazin (SD 52618), 2-Nitromethyl-3,4-dihydrothiazol (SD 35651), 2-Nitromethylene-1,3-thiazinan-3-yl-carbamaldehyde (WL 108 477), Propargite, Teflubenzuron, Tetradifon, Tetrasul, Thiocyclam, Triflumaron, Kernpolyeder- und Granuloseviren.

Der Wirkstoffgehalt der aus den handelsüblichen Formulierungen bereiteten Anwendungsformen kann in weiten Bereichen variieren, Die Wirkstoffkonznetration der Anwendungsformen kann von 0,0001 bis zu 100 Gew.-% Wirkstoff, vorzugsweise zwischen 0,001 und 1 Gew.-% liegen. Die Anwendung geschieht in einer den Anwendungsformen angepaßten üblichen Weise .

Nachfolgende Beispiele dienen zur Erläuterung der Erfindung.

## A. Formulierungsbeispiele

a) Ein Stäubemittel wird erhalten, indem man 10 Gew.-Teile Wirkstoff und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat stellt man her, indem man 40 Gew.-Teile Wirkstoff mit 7 Gew.-Teilen eines Sulfobernsteinsäurehalbesters, 2 Gew.-Teilen eines Ligninsulfonsäure-Natriumsalzes und 51 Gew.-Teilen Wasser mischt und in einer Reibkugelmühle auf eine Feinheit von unter 5 Mikron vermahlt.

d) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertem Nonylphenol (10 AeO) als Emulgator.

e) Ein Granulat läßt sich herstellen aus 2 bis 15 Gew.-Teilen Wirkstoff und einem inerten Granulatträgermaterial wie Attapulgit, Bimsgranulat und/oder Quarzsand. Zweckmäßigerweise verwendet man eine Suspension des Spritzpulvers aus Beispiel b) mit einem Feststoffanteil von 30 % und spritzt diese auf die Oberfläche eines Attapulgitgranulats, trocknet und vermischt innig. Dabei beträgt der Gewichtsanteil des Spritzpulvers ca. 5 % und der des inerten Trägermaterials ca. 95 % des fertigen Granulats.

## B. Chemische Beispiele

**Beispiel 1**

2-(2.4-Dichlorphenyl)-3-(3-pyridyl)-3-oxo-propyl)-dimethylphosphanoxid

Man gibt zu 55,6 g (0,2 mol) 2-(2.4-Dichlorphenyl)-1-(3-pyridyl)2-propen-1-on, das auf 80 °C gehalten wird, 16,0 g (= 0,2 mol) Dimethylphosphanoxid in Portionen zu. Die Temperatur wird durch Kühlen < 100 °C gehalten. Man rührt noch 2 h bei 80 °C nach und zieht bei dieser Temperatur alle flüchtigen Anteile ab. Es verbleiben 71,0 g (99,7 %) der Titelverbindung als gelbliches Harz, das durch das $^1$H-NMR-Spektrum charakterisiert wird.

**Beispiel 2**

2-(2.4-Dichlorphenyl)-3-hydroxy-3-(3-pyridyl)-propyldimethylphosphanoxid

71,2 g (0,2 mol) der nach Beispiel 1 erhaltenen Verbindung werden in 400 ml Ethanol gelöst und portionsweise mit 4,20 g (0,11 mol) Natriumborhydrid versetzt, wobei die Temperatur bis 40 °C steigt. Man erhitzt 2 h unter Rückfluß, gießt die abgekühlte Lösung auf 1 l Wasser und extrahiert 3 mal mit je 200 ml Dichlormethan. Nach dem Waschen der organischen Phase mit Wasser wird über $Na_2SO_4$ getrocknet und das Solvens im Vakuum entfernt. Der verbleibende Rückstand kristallisiert mit Diethylether. Man erhält 67,7 g (95%) der Titelverbindung als farblose Kristalle vom Schmelzpunkt 202 - 204 °C.

In analoger Weise, bzw. durch literaturbekannte Derivatisierung der Ketone können die in der nachfolgenden Tabelle aufgelisteten Verbindungen erhalten werden.

**Tabelle A: Verbindungen der allgemeinen Formel I mit X = CH**

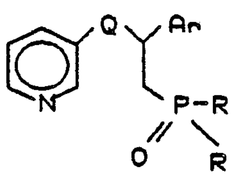

| Beisp. Nr. | Ar | R | R | Q | Smp. ~ [°C] |
|---|---|---|---|---|---|
| 3 | $-C_6H_5-2.4-Cl_2$ | $CH_3$ | $CH_3$ | $>C=NN(CH_3)_2$ | |
| 4 | " | " | " | $>C=NNHC_6H_5$ | |
| 5 | " | " | " | 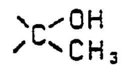 | 214-7 |
| 6 | " | " | " | 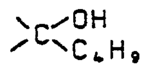 | |
| 7 | " | " | " | 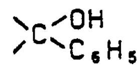 | |
| 8 | " | " | " | 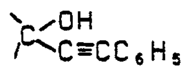 | |
| 9 | " | " | " | 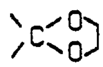 | |
| 10 | " | " | " | 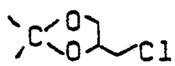 | |

| Bsp. Nr. | Ar | R | R | Q | Smp. [°C] |
|---|---|---|---|---|---|
| 11 | $-C_6H_5-2.4-Cl_2$ | $CH_3$ | $CH_3$ | 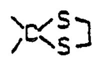 | |
| 12 | " | " | " | 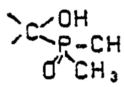 | |
| 13 | " | " | " | 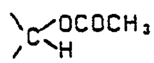 | |
| 14 | " | " | " | 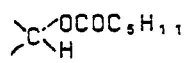 | |
| 15 | " | " | " | 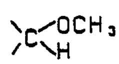 | Öl |
| 16 | " | " | " | 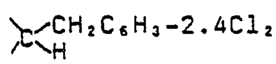 | Öl |
| 17 | " | " | " | 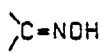 | 188-90 |
| 18 | " | " | " | 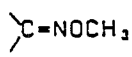 | |
| 19 | " | " | " | 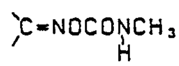 | |
| 20 | " | " | " | 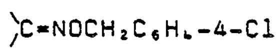 | |
| 21 | " | " | " | 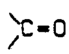 | Öl |
| 22 | " | " | " | 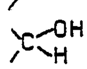 | Öl |
| 23 | " | " | " | 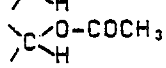 | |
| 24 | " | " | " | 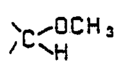 | |
| 25 | " | $OCH_3$ | $OCH_3$ | 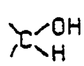 | Öl |
| 26 | " | " | " | 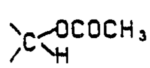 | |
| 27 | " | $-C_6H_5$ | $C_6H_5$ | 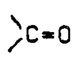 | |
| 28 | " | " | " | 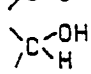 | |
| 29 | " | " | " | 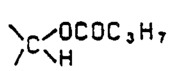 | |
| 30 | $-C_6H_4-4-Cl$ | " | " | 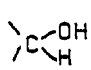 | 214-6 |

| Bsp. Nr. | Ar | R | R | Q | Smp. [°C] |
|---|---|---|---|---|---|
| 31 | $-C_6H_4-4-Cl$ | $CH_3$ | $CH_3$ | $>C=O$ | 178-80 |
| 32 | " | " | " | $>C<^{OH}_{H}$ | Öl |
| 33 | " | $OC_2H_5$ | $OC_2H_5$ | $>C=O$ | Öl |
| 34 | " | " | " | $>C<^{OH}_{H}$ | Öl |
| 35 | $C_6H_4-4-F$ | $CH_3$ | $CH_3$ | $>C=O$ | Öl |
| 36 | " | " | " | $>C<^{OH}_{H}$ | 138 (Zers.) |
| 37 | " | $-C_6H_5$ | $-C_6H_5$ | $>C=O$ | Öl |
| 38 | " | " | " | $>C<^{OH}_{H}$ | 188-94 |
| 39 | " | $OC_2H_5$ | $OC_2H_5$ | $>C=O$ | Öl |
| 40 | " | " | " | $>C<^{OH}_{H}$ | |
| 41 | $C_6H_4-4-C_6H_5$ | $CH_3$ | $CH_3$ | $>C=O$ | |
| 42 | " | " | " | $>C<^{OH}_{H}$ | |
| 43 | $C_6H_4-4-CF_3$ | " | " | $>C=O$ | Öl |
| 44 | " | " | " | $>C<^{OH}_{H}$ | Öl |
| 45 | " | $C_6H_5$ | $C_6H_5$ | $>C<^{OH}_{H}$ | |
| 46 | $C_6H_3-2-F,\ 4-Cl$ | $CH_3$ | $CH_3$ | $>C=O$ | Öl |
| 47 | " | " | " | $>C<^{OH}_{H}$ | 180-2 |
| 48 | 1-Naphthyl | " | " | $>C=O$ | Öl |
| 49 | " | " | " | $>C<^{OH}_{H}$ | 199-200 |
| 50 | " | $OC_2H_5$ | $OC_2H_5$ | $>C=O$ | Öl |
| 51 | " | " | " | $>C<^{OH}_{H}$ | Öl |
| 52 | " | $CH_3$ | $CH_3$ | $>C<^{OCOCH_3}_{H}$ | |
| 53 | 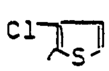 | $CH_3$ | " | $>C=O$ | |

| Bsp. Nr. | Ar | R | R | Q | Smp.: [°C] |
|---|---|---|---|---|---|
| 54 | 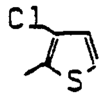 | $CH_3$ | $CH_3$ | 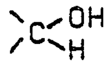 | |
| 55 | $-C_6H_3$2.4-$Cl_2$ | $CH_3$ | $-C_6H_4$-4-$CH_3$ | >C=O | |
| 56 | " | $CH_3$ | " | 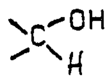 | |
| 57 | $-C_6H_4$-4F | $CH_3$ | $CH_3$ | 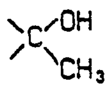 | 151°C |
| 58 | $-C_6H_3$-2.4-$Cl_2$ | $OC_2H_5$ | $OC_2H_5$ | >C=O | Öl |
| 59 | " | $CH_3$ | $OiC_4H_9$ | >C=O | Öl |
| 60 | $-C_6H_4$-4F | $CH_3$ | $OiC_4H_9$ | >C=O | Öl |
| 61 | " | $CH_3$ | $CH_3$ | 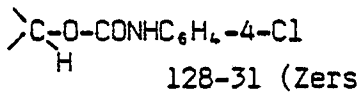 | 128-31 (Zers.) |
| 62 | $-C_6H_3$-2.4$Cl_2$ | $CH_3$ | $CH_3$ | " | 182-5 |
| 63 | " | $CH_3$ | $OiC_4H_9$ | 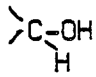 | Öl |
| 64 | $-C_6H_4$-4-Cl | $CH_3$ | " | >C=O | Öl |
| 65 | -1-naphthyl | $CH_3$ | " | >C=O | Öl |

| Bsp. Nr. | Ar | R | R | Q | Smp. [°C] |
|---|---|---|---|---|---|
| 66 | $-C_6H_3$-2,4-$Cl_2$ | $CH_3$ | $OC_2H_5$ | >C=O | Öl |
| 67 | " | $CH_3$ | " | >CHOH | Öl |
| 68 | " | $CH_3$ | " | 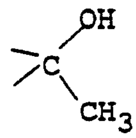 | |
| 69 | " | $CH_3$ | $O(n)C_6H_{13}$ | >C=O | Öl |
| 70 | " | $CH_3$ | " | >CHOH | Öl |
| 71 | " | $CH_3$ | " | 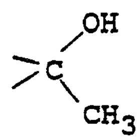 | Öl |
| 72 | " | $CH_3$ | $O(i)C_3H_7$ | >C=O | Öl |
| 73 | " | $CH_3$ | " | >CHOH | Öl |
| 74 | " | $C_6H_5$ | $OC_2H_5$ | >C=O | Öl |
| 75 | " | " | " | >CHOH | Öl |
| 76 | " | " | " | 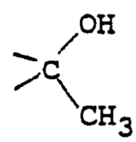 | Öl |
| 77 | $-C_6H_3$-2F,4-Cl | $CH_3$ | $O(i)C_4H_9$ | >CHOH | Öl |
| 78 | " | $CH_3$ | $O(i)C_3H_7$ | " | Öl |
| 79 | " | $C_6H_5$ | $OC_2H_5$ | " | Öl |
| 80 | $-C_6H_3$-2,4-$F_2$ | $CH_3$ | $O(i)C_4H_9$ | " | Öl |
| 81 | " | $CH_3$ | $O(i)C_3H_7$ | " | Öl |
| 82 | " | $CH_3$ | $OCH_3$ | " | Öl |
| 83 | " | $CH_3$ | OH | " | |
| 84 | $-C_6H_3$-2,4-$Cl_2$ | $CH_3$ | OH | " | |

## C. Biologische Beispiele

### Beispiel 1

Ackerbohnen (Sorten "Herz Freya" oder "Frank's Ackerperle") werden bei ca. 26 - 28° C und 60 % relativer Luftfeuchte angezogen. 14 Tage nach der Aussaat (Wuchshöhe 13 - 16 cm) sind die Pflanzen für Versuche geeignet.

Nach Vorbereitung der Pflanzen für den Versuch erfolgt die Applikation der Versuchspräparate mit den in Tabelle 1 angegebenen Konzentrationen mit einem Glaszerstäuber bei 0,3 - 0,5 bar Überdruck auf die Blätter der Ackerbohnen. Die behandelten Pflanzen werden zum Trocknen abgestellt und ca. 3 h später inokuliert.

Mit frischen Konidien von Botrytis cinerea werden Sporensuspensionen mit 4 x $10^5$ Sporen pro 1 ml hergestellt. Anschließend werden mit Hilfe eines fein sprühenden Glaszerstäubers die Sporensuspensionen gleichmäßig auf die Vicia faba Pflanzen appliziert und die Pflanzen in eine Klimakammer bei 20 - 22° C und ca. 99 % relativer Luftfeuchte aufgestellt. Die Infektion der Pflanzen äußert sich in der Bildung schwarzer Flecken auf Blättern und Stengeln, die bei starkem Befall die Pflanzen zusammenbrechen lassen. Die Auswertung der Versuche erfolgt 3 bzw. 6 Tage nach Inokulation.

Der Wirkungsgrad der Wirkstoffe wird ausgedrückt in % im Vergleich zur unbehandelten, infizierten Kontrolle.

**Tabelle 1**

**Wirkungsgrad gegenüber Botrytis cinerea in % bei ppm Wirkstoff. BCM- und Iprodion-sensibler (s) und resistenter (r) Stamm**

| Konz. in | s | | r | |
|---|---|---|---|---|
| ppm Wirkstoff | 500 | 250 | 500 | 250 |
| Beisp. Nr. | | | | |
| 2 | 95 | 85 | 95 | 85 |
| Kontrolle | 0 | | 0 | |

### Beispiel 2

Filterpapierscheibchen von 6 mm Durchmesser werden mit je 20 µl Wirkstoff (der Formel I) unterschiedlicher Konzentrationen gleichmäßig benetzt und auf ein je nach Pilzart unterschiedliches Agar-Medium aufgelegt. Dem Agar werden zuvor in noch flüssigem Zustand je Petrischale (10 ml Agar, 90 mm Durchmesser) 0,5 ml Suspensionskultur des Testorganismus (ca. $10^5$ - $10^6$ Konidien/ml) im vorliegenden Fall Botrytis cinerea (BCM- und Iprodionsensibler und resistenter Stamm) zugegeben und die so behandelten Agarplatten anschließend bei 25° C bebrütet. Nach 3 - 4 tägiger Inkubation wird die Inhibitionszone als Maß der Pilzhemmung gemessen und in mm angegeben. Eine Hemmzone von 10 mm wird als MIC-Wert (minimal inhibition concentration) des betreffenden Wirkstoffes in ppm Wirkstoff ausgedrückt.

**Tabelle 2**

**Wirkung gegenüber Botrytis cinerea: BMC- und Iprodionsensibler (s) und -resistenter (r) Stamm**

| | Hemmzonen in mm ø 20 µl pro Filterpapierscheibchen | Konzentr. ppm Wirkstoff | | |
|---|---|---|---|---|
| | s | | r | |
| Bsp. Nr. | 1000 | 500 | 1000 | 500 |
| 47 | 12 | 10 | - | - |
| 34 | 30 | 26 | 34 | 30 |
| 57 | 10 | 8 | - | - |
| Kontrolle | 0 | 0 | 0 | 0 |

**Beispiel 3**

Apfelunterlagen EM IX wurden im Vierblattstadium mit der beanspruchten Verbindung in den Anwendungskonzentrationen von 500 und 250 mg Wirkstoff/Liter Spritzbrühe bis zum Abtropfen behandelt. Nach Antrocknen des Wirkstoffbelages wurden die Pflanzen mit Konidien des Apfelschorfs (Venturia inaequalis) stark infiziert und tropfnaß in eine Klimakammer gestallt, deren Temperatur 22° C und deren relative Luftfeuchtigkeit 100 % betrug. Nach einer Inkubationszeit von 14 Tagen wurden die Pflanzen auf Befall mit Apfelschorf (Venturia inaequalis) untersucht. Die Beurteilung des Befalls erfolgte wie üblich nach Augenschein. Der Wirkungsgrad der Wirkstoffe bei Apfelschorf wird in % im Vergleich zur unbehandelten, infizierten Kontrolle angegeben.

**Tabelle 3**

| | % Wirkungsgrad bei Schorf (Venturia inaequalis) bei ppm Wirkstoff | |
|---|---|---|
| Bsp. Nr. | 500 | 250 |
| 2 | 100 | 100 |
| unbeh., infizierte Pflanzen | 0 | |

**Beispiel 4**

Weizenpflanzen wurden im 3-Blattstadium mit Konidien des Weizenmehltaus (Erysiphe graminis) stark inokuliert und in einem Gewächshaus bei 20° C und einer relativen Luftfeuchte von 90 - 95 % aufgestellt. 3 Tage nach Inokulation wurden die Pflanzen mit den in Tabelle 4 aufgeführten Verbindungen in den angegebenen Wirkstoffkonzentrationen gleichmäßig benetzt. Nach einer Inkubationszeit von 10 Tagen wurden die Pflanzen auf den Befall mit Weizenmehltau untersucht. Der Befallsgrad wird ausgedrückt in % befallener Blattfläche, bezogen auf unbehandelte, infizierte Kontrollpflanzen (= 100 % Befall). Das Ergebnis

ist in der Tabelle 4 zusammengefaßt.

**Tabelle 4**

**Mit Weizenmehltau befallene Blattflächen in % bei mg Wirkstoff/Liter Spritzbrühe**

| Bsp. Nr. | 500 | 250 |
|---|---|---|
| 2 | 0 | 0 |
| 47 | 0 | 0 |
| 58 | 0 | 0 |
| 33 | 0 | 0 |
| 17 | 0 | 5 |
| 36 | 0 | 0 |
| 59 | 0 | 0 |
| unb. infiz. Pfl. | 100 | |

## Ansprüche

1. Verbindungen der Formel I

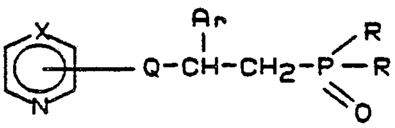

(I),

worin

X = N, CH oder N→O

R = unabhängig voneinander ($C_1$-$C_6$)-Alkyl, ($C_3$-$C_6$)Cycloalkyl, Phenyl, das bis zu dreifach durch Halogen, ($C_1$-$C_4$)Alkyl, ($C_1$-$C_2$)Haloalkyl, Cyano, Nitro, Hydroxy, Mercapto, ($C_1$-$C_6$)Alkoxy, ($C_1$-$C_6$)Alkylthio oder ($C_1$-$C_4$)Haloalkoxy substituiert sein kann,

Q = eine der Gruppen

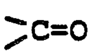, 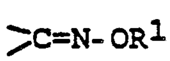, 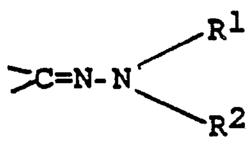, 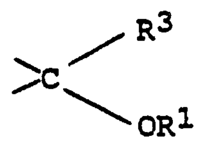

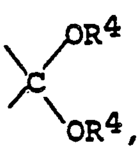, 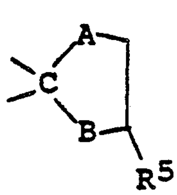, 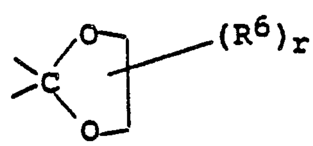,

R' = Wasserstoff, ($C_1$-$C_6$)Alkyl, ($C_3$-$C_6$)Cycloalkyl, ($C_3$-$C_6$)Alkenyl ($C_3$-$C_6$)Alkinyl, unsubstituiertes oder bis

zu dreifach im Phenylteil durch Halogen substituiertes Phenyl-($C_1$-$C_6$)alkyl oder Phenoxy-($C_1$-$C_6$)alkyl, den Rest

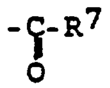 oder 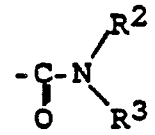 ,

$R^2$ = Wasserstoff, ($C_1$-$C_6$)Alkyl, unsubstituiertes oder bis zu dreifach durch Halogen, ($C_1$-$C_4$)Alkyl, Nitro, Cyano, ($C_1$-$C_4$)Alkoxy, Phenoxy oder Trihalogenmethyl substituiertes Phenyl,
$R^3$ = Wasserstoff, ($C_1$-$C_6$)Alkyl, ($C_3$-$C_6$)Alkinyl, Phenylacetylenyl, unsubstituiertes oder bis zu dreifach durch Halogen substituiertes Phenyl, $\underset{\underset{O}{\|}}{P}(CH_3)_2$,
$R^4$ = ($C_1$-$C_6$)Alkyl,
$R^5$ = Wasserstoff, den Rest ($C_1$-$C_6$)Alkyl-$NR^8R^9$, unsubstituiertes oder bis zu dreifach durch Halogen, Hydroxy, Mercapto, ($C_1$-$C_4$)Alkoxy, ($C_1$-$C_4$)Alkoxycarbonyl, Phenyl, Phenoxy, Phenylthio, Phenylsulfonyl, Phenyl-($C_1$-$C_4$)alkoxy, Phenyl-($C_1$-$C_4$)alkylthio oder Phenyl-($C_1$-$C_6$)alkylsulfonyl substituiertes ($C_1$-$C_6$)Alkyl, wobei die sieben letztgenannten Alkylsubstituenten unsubstituiert oder ihrerseits im Phenylteil bis zu dreifach durch Halogen, ($C_1$-$C_4$)Alkyl oder ($C_1$-$C_4$)Alkoxy substituiert sein können,
$R^6$ = Wasserstoff oder ($C_1$-$C_6$)Alkyl,
$R^7$ = ($C_1$-$C_6$)Alkyl, ($C_1$-$C_6$)Haloalkyl, ($C_3$-$C_6$)Cycloalkyl, ($C_3$-$C_6$)Alkenyl, ($C_3$-$C_6$)Alkinyl, Hydroxy, Mercapto, ($C_1$-$C_{12}$)Alkoxy, ($C_1$-$C_{12}$)Alkylthio, Phenyl, Napthyl, Phenyl-($C_1$-$C_4$)-alkyl, Phenyl-($C_1$-$C_4$)alkoxy oder Phenyl-($C_1$-$C_4$)alkylthio, wobei die fünf letztgenannten Reste im Naphthyl- oder Phenylteil unsubstituiert oder bis zu dreifach durch Halogen, ($C_1$-$C_4$)Alkyl, ($C_1$-$C_4$)Alkoxy, Phenoxy, Trifluormethyl oder Trichlormethyl substituiert sein können,
$R^8$, $R^9$ = unabhängig voneinander ($C_1$-$C_{12}$)Alkyl, ($C_3$-$C_{12}$)Alkenyl, ($C_3$-$C_7$)Alkinyl, ($C_5$-$C_7$)Cycloalkyl, das ein- oder mehrfach durch ($C_1$-$C_4$)Alkyl substituiert sein kann, ($C_6$-$C_{10}$)Aryl, ($C_6$-$C_{10}$)Aryl- ($C_1$-$C_2$)Alkyl, welche beide im Arylteil ein- oder mehrfach durch Halogen, ($C_1$-$C_4$)Alkyl oder ($C_1$-$C_2$)Haloalkyl substituiert sein können,
oder
einer der Reste $R^8$, $R^9$ ist ein unsubstituierter oder einfach oder mehrfach, gleich oder verschieden substituierter 5- bis 7-gliedriger, gesättigter oder ungesättigter, über ein C- oder ein Heteroatom gebundener Heterocyclus mit 1 bis 3 gleichen oder verschiedenen Heteroatomen, vorzugsweise mit den Heteroatomen Stickstoff und/oder Schwefel, und den Substituenten ($C_1$-$C_4$)Alkyl, ($C_1$-$C_4$)Alkoxycarbonyl oder Phenyl,
oder
beide Reste $R^8$, $R^9$ stehen zusammen mit dem Stickstoffatom, an das sie gebunden sind, für einen unsubstituierten oder einfach oder mehrfach, gleich oder verschieden substituierten 5- bis 7-gliedrigen, gesättigten oder ungesättigten Heterocyclus mit 1 bis 3 gleichen oder verschiedenen Heteroatomen, vorzugsweise mit den Heteroatomen Stickstoff, Sauerstoff und/oder Schwefel und den Substituenten ($C_1$-$C_4$)Alkyl, ($C_1$-$C_4$)Alkoxycarbonyl oder Phenyl,
r = 1, 2 oder 3
A, B = unabhängig voneinander O, NH, N($C_1$-$C_4$)-alkyl oder S,
Ar = eine der Gruppen

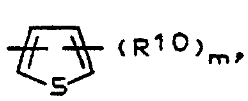 , 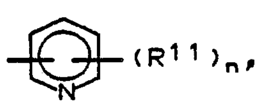 , 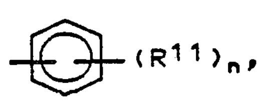 , 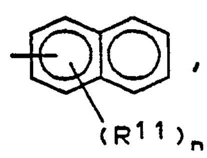 ,

$R^{10}$ = Wasserstoff, ($C_1$-$C_6$)Alkyl oder Halogen,
$R^{11}$ = Wasserstoff, Halogen, ($C_1$-$C_5$)Haloalkyl, Cyano, Nitro, Hydroxy, Mercapto, ($C_1$-$C_6$)Alkyl, ($C_3$-$C_6$)-Cycloalkyl, ($C_1$-$C_6$)Alkoxy, ($C_1$-$C_6$)Alkylthio, ($C_1$-$C_4$)Haloalkoxy, Phenyl, Phenyl($C_1$-$C_4$)alkyl, Phenoxy oder Phenylthio, wobei die vier letztgenannten Reste im Phenylteil bis zu dreifach durch Halogen substituiert sein können,
m = 1, 2 oder 3 und

n = 1, 2, 3 oder 4, wobei bei m > 1 als auch bei n > 1 die Substituenten $R^{10}$ bzw. $R^{11}$ gleich oder verschieden sein können,bedeuten, sowie deren N-oxide, Säureadditionssalze oder Quaternisierungsprodukte.

2. Verbindungen der Formel I von Anspruch 1 gemäß den Formeln Ia und Ib

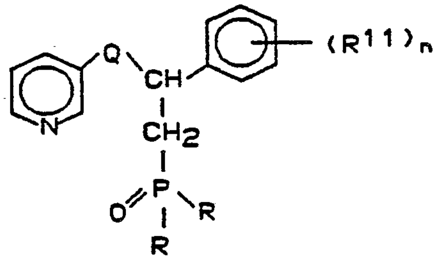

und

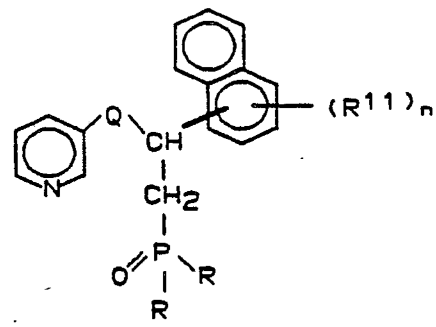

(Ia) (Ib) ,

worin
R, $R^{11}$, Q und n die Bedeutungen wie in Formel I besitzen, sowie deren Säureadditionsalze, N-oxide oder Quaternisierungsprodukte.

3. Verbindungen der Formeln Ia und Ib von Anspruch 2, worin R, $R^{11}$ und n die Bedeutungen wie in Formel I besitzen und Q die Reste >C=O, >C=NOR$^1$oder

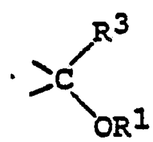

bedeutet, wobei $R^1$ und $R^3$ die Bedeutungen wie in Formel I besitzen, sowie deren N-oxide, Säureadditionssalze oder Quaternisierungsprodukte.

4. Verfahren zur Herstellung von Verbindungen der Formel I von Ansprüchen 1 bis 3, dadurch gekennzeichnet, daß man

a) eine Verbindung der Formel II

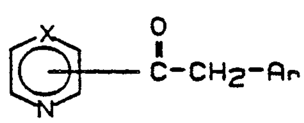

(II),

worin X und Ar die Bedeutungen wie in Formel I besitzen,
mit einer Verbindung der Formel III

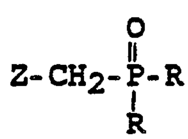

(III),

worin Z für eine nucleofuge Abgangsgruppe steht und R die Bedeutung wie in Formel I besitzt, in Gegenwart einer Base umsetzt oder

b) eine Verbindung der Formel IV

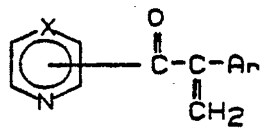

(IV),

worin X und Ar die Bedeutungen wie in Formel I besitzen, mit einer Verbindung der Formel V

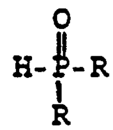

(V),

worin R die Bedeutung wie in Formel I besitzt, in Gegenwart einer Base umsetzt und die nach Variante a) oder b) erhaltenen Verbindungen der Formel I durch Derivatisierung der Carbonylgruppe in Verbindungen der Formel I mit Q ≠ >C=O umwandelt.

5. Fungizide Mittel, dadurch gekennzeichnet, daß sie eine wirksame Menge einer Verbindung der Formel I enthalten.

6. Verwendung von Verbindungen der Formel I zur Bekämpfung von Schadpilzen.

7. Verfahren zur Bekämpfung von Schadpilzen, dadurch gekennzeichnet, daß man auf diese oder die von ihnen befallenen Pflanzen, Flächen oder Substrate eine wirksame Menge einer Verbindung der Formel I appliziert.

Patentansprüche für folgenden Vertragsstaat:ES

1. Verfahren zur Herstellung von Verbindungen der Formel I

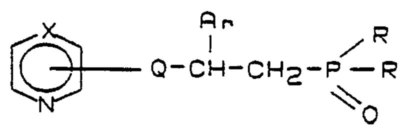

(I),

worin
X = N, CH oder N→O
R = unabhängig voneinander $(C_1-C_6)$-Alkyl, $(C_3-C_6)$Cycloalkyl, Phenyl, das bis zu dreifach durch Halogen, $(C_1-C_4)$Alkyl, $(C_1-C_2)$Haloalkyl, Cyano, Nitro, Hydroxy, Mercapto, $(C_1-C_6)$Alkoxy, $(C_1-C_6)$Alkylthio oder $(C_1-C_4)$Haloalkoxy substituiert sein kann,
Q = eine der Gruppen

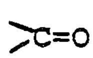, 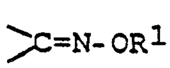, 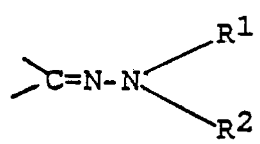, 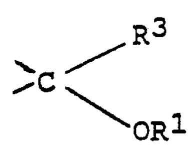 .

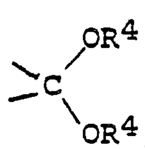, 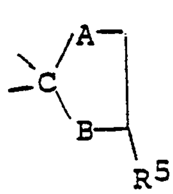 , 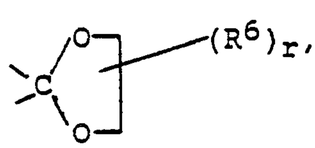

worin
$R^1$ = Wasserstoff, $(C_1-C_6)$Alkyl, $(C_3-C_6)$Cycloalkyl, $(C_3-C_6)$Alkenylen, $(C_3-C_6)$Alkinyl, unsubstituiertes oder bis zu dreifach im Phenylteil durch Halogen substituiertes Phenyl-$(C_1-C_6)$alkyl oder Phenoxy-$(C_1-C_6)$alkyl,

den Rest

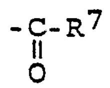 oder 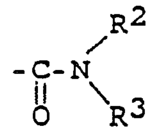,

$R^2$ = Wasserstoff, $(C_1\text{-}C_6)$Alkyl, unsubstituiertes oder bis zu dreifach durch Halogen, $(C_1\text{-}C_4)$Alkyl, Nitro, Cyano, $(C_1\text{-}C_4)$Alkoxy, Phenoxy oder Trihalogenmethyl substituiertes Phenyl,
$R^3$ = Wasserstoff, $(C_1\text{-}C_6)$Alkyl, $(C_3\text{-}C_6)$Alkinyl, Phenylacetylenyl, unsubstituiertes oder bis zu dreifach durch Halogen substituiertes Phenyl, $\underset{\underset{O}{\|}}{P}(CH_3)_2$,
$R^4$ = $(C_1\text{-}C_6)$Alkyl,
$R^5$ = Wasserstoff, den Rest $(C_1\text{-}C_6)$Alkyl-$NR^8R^9$, unsubstituiertes oder bis zu dreifach durch Halogen, Hydroxy, Mercapto, $(C_1\text{-}C_4)$Alkoxy, $(C_1\text{-}C_4)$Alkoxycarbonyl, Phenyl, Phenoxy, Phenylthio, Phenylsulfonyl, Phenyl-$(C_1\text{-}C_4)$alkoxy, Phenyl-$(C_1\text{-}C_4)$alkylthio oder Phenyl-$(C_1\text{-}C_6)$alkylsulfonyl substituiertes $(C_1\text{-}C_6)$Alkyl, wobei die sieben letztgenannten Alkylsubstituenten unsubstituiert oder ihrerseits im Phenylteil bis zu dreifach durch Halogen, $(C_1\text{-}C_4)$Alkyl oder $(C_1\text{-}C_4)$Alkoxy substituiert sein können,
$R^5$ = Wasserstoff oder $(C_1\text{-}C_6)$Alkyl,
$R^7$ = $(C_1\text{-}C_6)$Alkyl, $(C_1\text{-}C_6)$Haloalkyl, $(C_3\text{-}C_6)$Cycloalkyl, $(C_3\text{-}C_6)$Alkenyl, $(C_3\text{-}C_6)$Alkinyl, Hydroxy, Mercapto, $(C_1\text{-}C_{12})$Alkoxy, $(C_1\text{-}C_{12})$Alkylthio, Phenyl, Napthyl, Phenyl-$(C_1\text{-}C_4)$-alkyl, Phenyl-$(C_1\text{-}C_4)$alkoxy oder Phenyl-$(C_1\text{-}C_4)$alkylthio, wobei die fünf letztgenannten Reste im Naphthyl- oder Phenylteil unsubstituiert oder bis zu dreifach durch Halogen, $(C_1\text{-}C_4)$Alkyl, $(C_1\text{-}C_4)$Alkoxy, Phenoxy, Trifluormethyl oder Trichlormethyl substituiert sein können,
$R^8$, $R^9$ = unabhängig voneinander $(C_1\text{-}C_{12})$Alkyl, $(C_3\text{-}C_{12})$Alkenyl, $(C_3\text{-}C_7)$Alkinyl, $(C_5\text{-}C_7)$Cycloalkyl, das ein- oder mehrfach durch $(C_1\text{-}C_4)$Alkyl substituiert sein kann, $(C_6\text{-}C_{10})$Aryl, $(C_6\text{-}C_{10})$Aryl- $(C_1\text{-}C_2)$Alkyl, welche beide im Arylteil ein- oder mehrfach durch Halogen, $(C_1\text{-}C_4)$Alkyl oder $(C_1\text{-}C_2)$Haloalkyl substituiert sein können,
oder
einer der Reste $R^8$, $R^9$ ist ein unsubstituierter oder einfach oder mehrfach, gleich oder verschieden substituierter 5- bis 7-gliedriger, gesättigter oder ungesättigter, über ein C- oder ein Heteroatom gebundener Heterocyclus mit 1 bis 3 gleichen oder verschiedenen Heteroatomen, vorzugsweise mit den Heteroatomen Stickstoff und/oder Schwefel, und den Substituenten $(C_1\text{-}C_4)$Alkyl, $(C_1\text{-}C_4)$Alkoxycarbonyl oder Phenyl,
oder
beide Reste $R^8$, $R^9$ stehen zusammen mit dem Stickstoffatom, an das sie gebunden sind, für einen unsubstituierten oder einfach oder mehrfach, gleich oder verschieden substituierten 5- bis 7-gliedrigen, gesättigten oder ungesättigten Heterocyclus mit 1 bis 3 gleichen oder verschiedenen Heteroatomen, vorzugsweise mit den Heteroatomen Stickstoff, Sauerstoff und/oder Schwefel und den Substituenten $(C_1\text{-}C_4)$Alkyl, $(C_1\text{-}C_4)$Alkoxycarbonyl oder Phenyl,
r = 1, 2 oder 3
A, B = unabhängig voneinander O, NH, $N(C_1\text{-}C_4)$-alkyl oder S,
Ar = eine der Gruppen

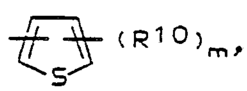, 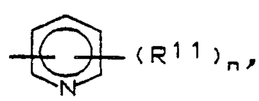, 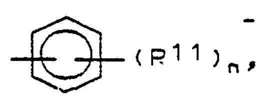, 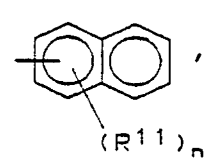,

worin
$R^{10}$ = Wasserstoff, $(C_1\text{-}C_6)$Alkyl oder Halogen,
$R^{11}$ = Wasserstoff, Halogen, $(C_1\text{-}C_5)$Haloalkyl, Cyano, Nitro, Hydroxy, Mercapto, $(C_1\text{-}C_6)$Alkyl, $(C_3\text{-}C_6)$-Cycloalkyl, $(C_1\text{-}C_6)$Alkoxy, $(C_1\text{-}C_6)$Alkylthio, $(C_1\text{-}C_4)$Haloalkoxy, Phenyl, Phenyl$(C_1\text{-}C_4)$alkyl, Phenoxy oder Phenylthio, wobei die vier letztgenannten Reste im Phenylteil bis zu dreifach durch Halogen substituiert sein können,
m = 1, 2 oder 3 und

n = 1, 2, 3 oder 4, wobei bei m > 1 als auch bei n > 1 die Substituenten $R^{10}$ bzw. $R^{11}$ gleich oder verschieden sein können bedeuten, sowie deren N-oxide, Säureadditionssalze oder Quaternisierungsprodukte, dadurch gekennzeichnet, daß man

a) eine Verbindung der Formel II

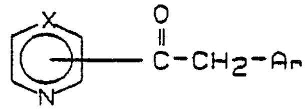

(II),

worin X und Ar die Bedeutungen wie in Formel I besitzen,
mit einer Verbindung der Formel III

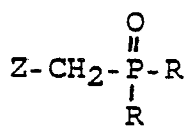

(III),

worin Z für eine nucleofuge Abgangsgruppe steht und R die Bedeutung wie in Formel I besitzt, in Gegenwart einer Base umsetzt oder

b) eine Verbindung der Formel IV

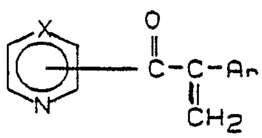

(IV),

worin X und Ar die Bedeutungen wie in Formel I besitzen, mit einer Verbindung der Formel V

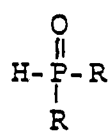

(V),

worin R die Bedeutung wie in Formel I besitzt, in Gegenwart einer Base umsetzt und die nach Variante a) oder b) erhaltenen Verbindungen der Formel I durch Derivatisierung der Carbonylgruppe in Verbindungen der Formel I mit $Q \neq\ >C=O$ umwandelt.

2. Verfahren gemäß Anspruch 1, dadurch gekennzeichnet, daß Formel I den Formeln Ia und Ib entspricht

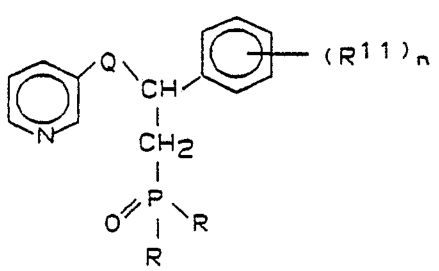

und

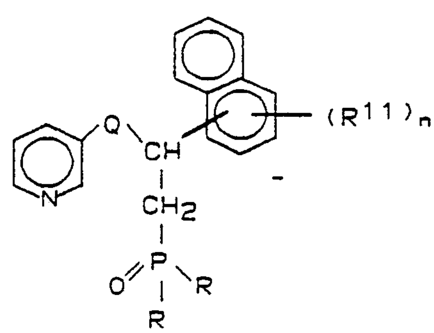

(Ia) (Ib)

worin
R, $R^{11}$, Q und n die Bedeutungen wie in Formel I besitzen, sowie deren Säureadditionsalze, N-oxide oder Quaternisierungsprodukte.

3. Verfahren gemäß Anspruch 1, dadurch gekennzeichnet, daß Formel I den Formeln Ia und Ib entspricht, worin R, $R^{11}$ und n die Bedeutungen wie in Formel I besitzen und Q die Reste >C=O, >C=$NOR^1$ oder

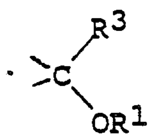

bedeutet, wobei $R^1$ und $R^3$ die Bedeutungen wie in Formel I besitzen, sowie deren N-oxide, Säureadditionssalze oder Quaternisierungsprodukte.

4. Fungizide Mittel, dadurch gekennzeichnet, daß sie eine wirksame Menge einer Verbindung der Formel I gemäß Ansprüchen 1-3 enthalten.

5. Verwendung von Verbindungen der Formel I gemäß Ansprüchen 1-3 zur Bekämpfung von Schadpilzen.

6. Verfahren zur Bekämpfung von Schadpilzen, dadurch gekennzeichnet, daß man auf diese oder die von ihnen befallenen Pflanzen, Flächen oder Substrate eine wirksame Menge einer Verbindung der Formel I gemäß Ansprüchen 1-3 appliziert.